# EUROPEAN PATENT APPLICATION

(11) **EP 4 134 950 A2**
(43) Date of publication of application: **15.02.2023**
(21) Application number: 22209126.6
(22) Date of filing: 23.11.2022
(51) Int. Cl.: G10L 15/22, G06F 3/16, G10L 15/183

(54) **METHOD AND APPARATUS FOR SPEECH BASED INSTRUCTION SCHEDULING, AND ELECTRONIC DEVICE**

(30) Priority: 26.11.2021 CN 202111418254
(71) Applicant: Beijing Baidu Netcom Science Technology Co., Ltd., Beijing 100085 (CN)
(72) Inventor: XIA, Shuai, Beijing 100085 (CN); HUANG, Weiqi, Beijing 100085 (CN); JIANG, Peng, Beijing 100085 (CN); TANG, Ruijian, Beijing 100085 (CN)
(74) Representative: advotec.

(57) **Abstract**

The invention provides a method and an apparatus for speech-based instruction scheduling, and an electronic device, which relate to the field of speech technology. The method includes: a microphone included in an electronic device receiving a first input speech from a user; the electronic device converting the first input speech into a first text message; the electronic device obtaining first instruction contents of the first text message by parsing the first text message based on preset configuration instructions, in which the first instruction contents are configured to represent a target instruction object and a target instruction action; and the electronic device sending the first instruction contents to a scheduling object, so that the scheduling object controls the target instruction object to execute the target instruction action based on the first instruction contents. Therefore, it is achieved that the scheduling object is controlled based on a speech to perform automatic scheduling, and the scheduling efficiency is improved.

## Description

### TECHNICAL FIELD

The invention relates to the field of artificial intelligence technology, especially the field of speech technology, and in particular to a method for speech-based instruction scheduling, an apparatus for speech-based instruction scheduling and an electronic device.

### BACKGROUND

In order to facilitate the user to monitor, monitoring images captured by different cameras can be displayed on a large scale screen. In addition, the user wants to view the monitoring images captured by different cameras at different times and in different scenarios according to actual needs. For example, the user may view the monitoring images captured by the cameras installed at a building entrance during the day, and may view the monitoring images captured by the cameras installed in an interior corridor of the building at night. Therefore, the user manually designates the cameras on the large-scale screen according to actual needs, so that the large-scale screen displays the monitoring images captured by the cameras designated by the user.

### SUMMARY

The invention provides a method for speech-based instruction scheduling, an apparatus for speech-based instruction scheduling, an electronic device and a storage medium.

According to a first aspect of the invention, a method for speech-based instruction scheduling is performed by an electronic device. The method includes: receiving a first input speech from a user by a microphone included in the electronic device; converting the first input speech into a first text message; obtaining first instruction contents of the first text message by parsing the first text message based on preset configuration instructions, wherein the first instruction contents include a target instruction object and a target instruction action; and sending the first instruction contents to a scheduling object, so that the scheduling object controls the target instruction object to execute the target instruction action based on the first instruction contents.

According to a second aspect of the invention, an apparatus for speech-based instruction scheduling is integrated into an electronic device. The apparatus includes: a speech receiving module, a text converting module, an instruction parsing module and a scheduling module. The speech receiving module is configured to receive a first input speech from a user by a microphone included in the electronic device. The text converting module is configured to convert the first input speech into a first text message. The instruction parsing module is configured to obtain first instruction contents of the first text message by parsing the first text message based on preset configuration instructions, in which the first instruction contents include a target instruction object and a target instruction action. The scheduling module is configured to send the first instruction contents to a scheduling object, so that the scheduling object controls the target instruction object to execute the target instruction action based on the first instruction contents.

According to a third aspect of the invention, an electronic device is provided. The electronic device includes: a microphone, at least one processor and a memory communicatively coupled to the at least one processor. The microphone may be configured to receive a first input speech from a user. The memory may be configured to store instructions executable by the at least one processor, and when the instructions are executed by the at least one processor, the at least one processor is enabled to implement the method according to any one of the first aspect of the invention.

According to a fourth aspect of the invention, a non-transitory computer-readable storage medium storing computer instructions is provided. The computer instructions are configured to cause a computer to implement the method according to any one of the first aspect of the invention.

According to a fifth aspect of the invention, a computer program product including computer programs is provided. When the computer programs are executed by a processor, the method according to any one of the first aspect of the invention.

Beneficial effects of the embodiments of the invention are provided as follows.

According to the embodiments of the invention, after receiving the first input speech, it is converted into the first text message. The first instruction contents are obtained by parsing the first text message according to the preset configuration instructions, that is, the first instruction contents of the first text message can be obtained, and the scheduling object is scheduled according to the first instruction contents, so that the scheduling object controls the target instruction object to execute the target instruction action. On the basis, through the recognition and analysis of the input speech, the input speech is automatically converted into instructions recognizable by the scheduling object and sent to the scheduling object, so that the scheduling object can perform the corresponding scheduling operation according to the instructions, thereby realizing the scheduling object is controlled based on a speech to perform automatic scheduling, and improving the scheduling efficiency.

It should be understood that the content described in this section is not intended to identify key or important features of the embodiments of the invention, nor is it intended to limit the scope of the invention. Additional features of the invention may be easily understood based on the following description.

### BRIEF DESCRIPTION OF THE DRAWINGS

The drawings are used to better understand the solution and do not constitute a limitation to the invention.
FIG. 1 is a flowchart of a method for speech-based instruction scheduling according to the invention.
FIG. 2 is another flowchart of a method for speech-based instruction scheduling according to the invention.
FIG. 3 is a flowchart of a method for obtaining preset configuration instructions according to the invention.
FIG. 4 is another flowchart of a method for speech-based instruction scheduling according to the invention.
FIG. 5 is a flowchart of a specific implementation of a method for speech-based instruction scheduling according to the invention.
FIG. 6 is a schematic diagram of an apparatus for speech-based instruction scheduling according to the invention.
FIG. 7 is a block diagram of an electronic device used to implement the method for speech-based instruction scheduling according to the embodiments of the invention.

### DETAILED DESCRIPTION

The following describes the exemplary embodiments of the invention with reference to the accompanying drawings, which includes various details of the embodiments of the invention to facilitate understanding, which shall be considered merely exemplary. For clarity and conciseness, descriptions of well-known functions and structures are omitted in the following description.

In the related art, in the scenario of scheduling other devices through a large-scale screen, for example, cameras around the building, when it is necessary to display the monitoring images of a certain location on a certain floor on the large-scale screen, the user needs to manually select controls for the cameras that shoot the certain location of the building on the screen, and click the controls to realize the scheduling of the cameras. The large-scale screen is often provided with a control for each camera, so it takes a long time to manually find out the control for a certain camera from all the controls, the camera images cannot be displayed on the screen in time, and high labor costs are required.

According to the following method of the invention, through the recognition and analysis of the input speech, the input speech is automatically converted into instructions recognizable by the scheduling object and sent to the scheduling object, so that the scheduling object can perform the corresponding scheduling operation according to the instructions, thereby solving the above problem in the relate art, realizing the scheduling object is controlled based on a speech to perform automatic scheduling, and improving the scheduling efficiency.

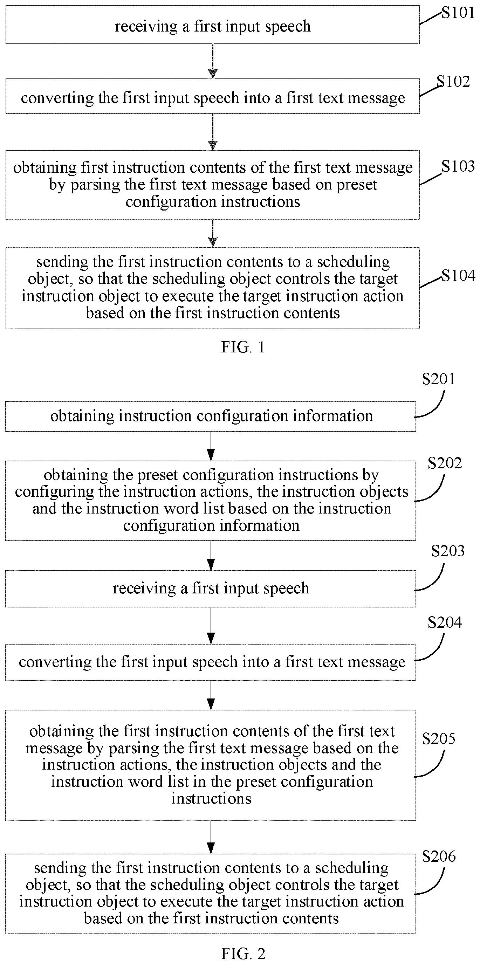

The invention provides a method for speech-based instruction scheduling, as illustrated in FIG. 1, the method includes the following steps.

At S101, a first input speech is received.

At S102, the first input speech is converted into a first text message.

At S103, first instruction contents of the first text message are obtained by parsing the first text message based on preset configuration instructions.

At S104, the first instruction contents are sent to a scheduling object, so that the scheduling object controls a target instruction object to execute a target instruction action based on the first instruction contents.

In this embodiment, after receiving the first input speech, it is converted into the first text message. The first instruction contents are obtained by parsing the first text message according to the preset configuration instructions, that is, the first instruction contents of the first text message can be obtained, and the scheduling object is scheduled according to the first instruction contents, so that the scheduling object controls the target instruction object to execute the target instruction action. On the basis, through the recognition and analysis of the input speech, the input speech is automatically converted into instructions recognizable by the scheduling object and sent to the scheduling object, so that the scheduling object can perform the corresponding scheduling operation according to the instructions, thus realizing to control the scheduling object based on the speech to perform automatic scheduling, and improving the scheduling efficiency.

It can be understood that the method of the invention may be executed by an electronic device including the scheduling object, or may be executed by an electronic device independent of the device where the scheduling object is located. The scheduling object may be an independent device or a module integrated on the electronic device. In a possible embodiment, the scheduling object may be a device or a module that can display scheduling execution results.

In S101, the first input speech can be a speech sent directly by a scheduling manager, or a speech sent by the scheduling manager through other devices. For example, the first input speech is s pre-recorded speech of the scheduling manager played by an audio playback device, which is not limited in the invention. The execution body may include a microphone module, to realize reception of the first input speech.

In S102, the first input speech may be converted into the first text message by any speech recognition technology.

In S103, the first instruction contents are used to represent the target instruction object and the target instruction action. The execution body parses the first text message into the first instruction contents representing the target instruction object and the target instruction action according to the preset configuration instructions. The preset configuration instructions are used to instruct the execution body to parse the first text message into the first instruction contents, in which the preset configuration instructions are preset by the user according to actual needs or experience. The preset configuration instructions may be exemplarily described below, which may not be repeated here. For example, when the first text message is "turning on the cameras outside Room 201", then the target instruction object of the first instruction contents obtained by parsing the first text message according to the preset configuration instructions is "cameras outside Room 201", and the target instruction action is "turning on the cameras". In addition, the types of target instruction objects may also be different according to different application scenarios. For example, when the application scenario is to schedule devices in a park, the target instruction objects may be street lights or broadcast players in the park. For another example, when the application scenario is to schedule devices in an office building, the target instruction objects may be air conditioners and cameras of each floor in the office building. Depending on the type of the target instruction object, the target instruction action may also be different. For example, for the case where the target instruction object is a street light, the target instruction action can be turning on, turning off, and adjusting the brightness of the street light. When the target instruction object is a broadcast player, the target instruction action may be selecting and controlling broadcast contents or adjusting the broadcast volume. The target instruction action should be an action executable by the target instruction object.

It can be understood that the above example is only to illustrate the meanings of the target instruction object and the target instruction action. In detail, when analyzing the first text message according to the preset configuration instructions, the obtained first instruction contents should be instruction messages recognizable by the electronic device where the scheduling object is located.

In S104, when the executive body is an electronic device that includes the scheduling object, the executive body can send the first instruction contents to the module where the scheduling object is located in the electronic device, so that the scheduling object controls the target instruction object to execute the target instruction action based on the first instruction contents. When the execution body is an electronic device independent of the device where the scheduling object is located, the execution body can send the first instruction contents to the device where the scheduling object is located, so that the scheduling object controls the target instruction object to execute the target instruction action based on the first instruction contents. After receiving the parsed first instruction contents, the scheduling object can determine the target instruction object and the target instruction action included in the first instruction contents. As mentioned above, taking as an example that the first text message is "turning on the cameras outside Room 201" and the target instruction action is "turning on the cameras", controlling by the scheduling object the target instruction object to execute the target instruction action according to the first instruction contents may include that, the scheduling object turns on the cameras outside Room 201, and the scheduling object displays the camera images in response to the cameras being turned on.

In an embodiment, the invention also provides a method for speech-based instruction scheduling, as illustrated in FIG. 2, the method includes the following steps.

At S201, instruction configuration information is obtained.

The instruction configuration information includes: instruction actions, instruction objects and an instruction word list. The instruction word list includes a correspondence between text messages, the instruction objects and the instruction actions. In an example, the instruction word list includes a correspondence between text messages and instruction objects, and a correspondence between text messages and instruction actions. A plurality of instruction objects may exist in different scheduling scenarios, and multiple instruction objects may also exist in each scheduling scenario. For example, in the scenario where a large-scale screen is used to schedule cameras, and there are multiple cameras to perform monitoring and shooting, the instruction objects can be cameras at different positions, such as a camera at the northeast corner of the first floor, and a camera at the northwest corner of the second floor. For these instruction objects, the instruction actions can be turning on the cameras, turning off the cameras, or adjusting shooting positions of the cameras, zooming in or out a capturing image of the camera.

Taking as an example that the first text message is "turning on high-point cameras at Xibeiwang", according to the instruction word list, "Xibeiwang" corresponds to "USER LOCATION" in the instruction objects, "high-point" corresponds to "USER_CAMERA_TYPE" in the instruction objects, "turning on the cameras" corresponds to the instruction action "OPEN_LOCATION". When "Xibeiwang" in the above first text message is another location such as "the northeast corner", then "the northeast corner" in the first text message, according to the instruction word list, corresponds to "USER_LOCATION_1" or "USER_LOCATION_2" in the instruction objects. These correspondences are preset in the instruction word list when acquiring the instruction configuration information. In practical application, there are many first text messages such as "turning on a certain type of camera at a certain place". In fact, the instruction objects of these first text messages are different, while the instruction action does not change. Therefore, when obtaining the instruction configuration information, in different scenarios, it needs to obtain the correspondence between the instruction objects and the text messages under the scenarios needs as comprehensively as possible. For example, in a scenario where a large-scale screen is used to schedule cameras in various places, it is possible to obtain a combination of setting locations and camera types for all cameras, so as to configure corresponding instruction objects respectively, and expand the instruction word list.

At S202, the preset configuration instructions are obtained by configuring the instruction actions, the instruction objects and the instruction word list based on the instruction configuration information.

In S202, the instruction actions are combined with the instruction objects respectively, to obtain the instruction contents. The preset configuration instructions include the instruction contents and the instruction word list containing the correspondence between the instruction objects, the instruction actions and the text message.

At S203, a first input speech is received.

This step is the same as S101, and reference may be made to the relevant description of S101, which may not be repeated here.

At S204, the first input speech is converted into a first text message.

This step is the same as S102, and reference may be made to the relevant description of S102, which may not be repeated here.

At S205, the first instruction contents of the first text message are obtained by parsing the first text message based on the instruction actions, the instruction objects and the instruction word list in the preset configuration instructions.

In S205, since the preset configuration instructions contain the instruction word list, and the instruction word list contains the correspondence between the instruction objects, the instruction actions and the text message, so the target instruction object and the target instruction action in the first text message are determined according to the correspondence in the instruction word list, and the first instruction contents recognizable by the electronic device can be obtained.

At S206, the first instruction contents are sent to a scheduling object, so that the scheduling object controls the target instruction object to execute the target instruction action based on the first instruction contents.

This step is the same as S104, and reference may be made to the relevant description of S104, which may not be repeated here.

In this embodiment, the preset configuration instructions can be pre-configured according to different application scenarios comprehensively, so that the first text message can be accurately parsed to obtain the first instruction contents, and the scheduling object can more accurately control the target instruction object to execute the target instruction action, thereby improving the speech-based instruction scheduling efficiency.

In a possible embodiment, the instruction word list from the instruction configuration information obtained in S201 may not contain the correspondence between the instruction objects, the instruction actions and the text message, so that it is difficult to accurately parse the first text message. For example, the instruction word list does not contain the correspondence between the text message "northeast corner of the square" and the instruction object "first camera", then in response that the first text message is "turning on the cameras in the northeast corner of the square", the execution body cannot parse and determine the target instruction object as the first camera according to the first text message.

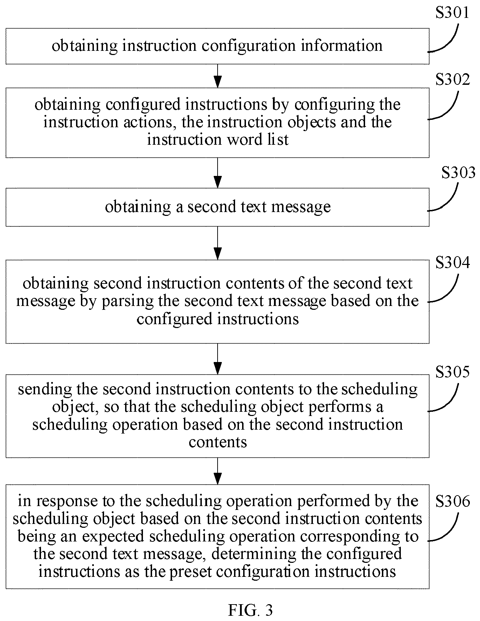

On the basis, the invention provides a method for obtaining preset configuration instructions, as illustrated in FIG. 3, the method includes the following steps.

At S301, instruction configuration information is obtained.

This step is the same as S201, and reference may be made to the relevant description of S201, which may not be repeated here.

At S302, configured instructions are obtained by configuring the instruction actions, the instruction objects and the instruction word list.

In S302, the instruction actions and the instruction objects are combined to obtain the instruction contents, and the configured instructions include the instruction contents and the instruction word list.

At S303, a second text message is obtained.

In S303, the second text message is served as a test text message to test whether the configured instruction can successfully parse out second instruction contents, which should contain instructions on the scheduling object, such as a kind of sentence, "turning on the cameras in the northeast corner". The second text message may be input to the execution body by the user by means of speech, or may be input to the execution body by means other than speech, such as text, pictures, and the like.

At S304, second instruction contents of the second text message are obtained by parsing the second text message based on the configured instructions.

This step is similar to S103, and the parsing method is the same, reference may be made to the relevant description of S103, which may not be repeated here.

At S305, the second instruction contents are sent to the scheduling object, so that the scheduling object performs a scheduling operation based on the second instruction contents.

This step is similar to S104, the executed instruction contents are different, but the execution method is the same. Reference may be made to the relevant description of S104, which may not be repeated here.

At S306, in response to the scheduling operation performed by the scheduling object based on the second instruction contents being an expected scheduling operation corresponding to the second text message, the configured instructions are determined as the preset configuration instructions.

In S306, the expected scheduling operation corresponding to the second text message is a scheduling operation desired by the user inputting the second text message. For example, when the user inputs the second text message, the scheduling object is expected to display the images captured by the first camera, then the expected scheduling operation corresponding to the second text message is that the scheduling object displays the images captured by the first camera.

After the scheduling object performs the scheduling operation based on the second instruction contents, the operation result can be displayed. Taking the above second text message is "turning on the cameras in the northeast corner" as an example, it can be understood that the second text message corresponding to the expected scheduling operation is to turn on the cameras in the northeast corner. If the scheduling is successful, the scheduling object may display the images captured by the cameras in the northeast corner. Therefore, it can be determined according to the operation result displayed by the scheduling object, whether the scheduling operation performed by the scheduling object according to the second instruction contents is the expected scheduling operation corresponding to the second text message.

When the scheduling object displays the images captured by the cameras in the northeast corner, it means that the scheduling operation performed by the scheduling object according to the second instruction contents is the expected scheduling operation corresponding to the second text message, i.e., the second instruction contents obtained by parsing the second text message according to the configured instructions are accurate, which also means that the configured instructions are reasonably valid. Therefore, the configured instructions can be used as the preset configuration instructions for subsequent parsing of the first text message.

It can be understood that, when the scheduling operation performed by the scheduling object according to the second instruction contents is not the expected scheduling operation corresponding to the second text message, it means that there is an error in the configured instructions. At this time, it is necessary to further adjust the configured instructions accordingly.

In this embodiment, the configured instructions can be tested, to obtain the preset configuration instructions that can accurately parse the text message, and improve the instruction parsing efficiency, thus improving the speech-based instruction scheduling efficiency.

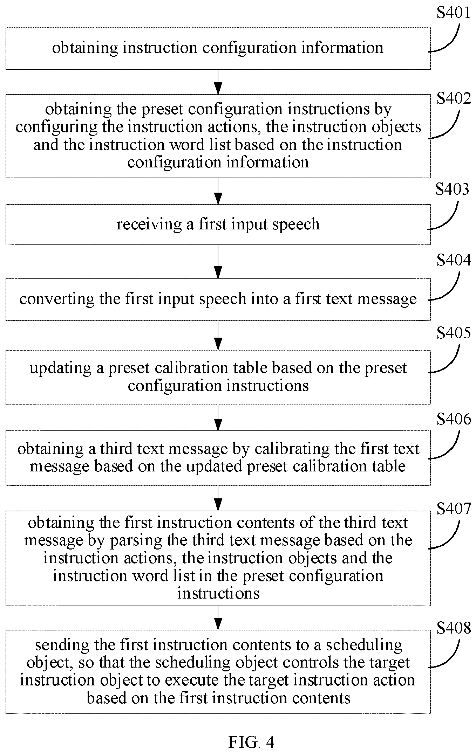

In a possible embodiment, since the first input speech is not accurately converted into the first text message, even if the preset configuration instructions can accurately parse out the first text message, the subsequent scheduling operation result by the scheduling object according to the first instruction contents is not the expected scheduling operation result of the first input speech. On the basis, the invention also provides a method for speech-based instruction scheduling, as illustrated in FIG. 4, the method includes the following steps.

At S401, instruction configuration information is obtained.

This step is the same as S201, and reference may be made to the relevant description of S201, which may not be repeated here.

At S402, the preset configuration instructions are obtained by configuring the instruction actions, the instruction objects and the instruction word list based on the instruction configuration information.

This step is the same as S202, and reference may be made to the relevant description of S202, which may not be repeated here.

At S403, a first input speech is received.

This step is the same as S101, and reference may be made to the relevant description of S101, which may not be repeated here.

At S404, the first input speech is converted into a first text message.

This step is the same as S102, and reference may be made to the relevant description of S102, which may not be repeated here.

At S405, a preset calibration table is updated based on the preset configuration instructions.

In S405, in the process of converting a speech into a text message, since some words are not often used in daily life, the conversion process may convert the actual meaning of the speech into a different text message. For example, the speech corresponding to the real text message "turning on the high-point cameras at Xibeiwang" may be converted to a wrong text message "turning on the high-point cameras at XIBEIWANG", thus the scheduling has failed. Here, the Chinese pronunciation of "Xibeiwang" (its meaning refers to a place name) is the same as that of "XIBEIWANG (its meaning in English is northwest looking)". Therefore, the converted first text message is calibrated based on the preset calibration table. In an example, the first text message after mis-recognition may refer to a text message with different meaning from the real intent of the first input speech due to a homonymous phenomenon of a word. It is understood that, the preset calibration table can not only calibrate nouns and verbs of the first text message, but also calibrate modal particles and hit words. The preset configuration instructions contain the instruction word list, and the instruction word list contains the correspondence between the instruction objects, the instruction actions and the text messages. After configuring the preset configuration instruction word list, the preset calibration table can be updated according to the text messages in the instruction word list, so that the text message that does not often appear in daily life but often appears in the instruction word list can be displayed in the preset calibration table, so that the first text message can be further calibrated.

At S406, a third text message is obtained by calibrating the first text message based on the updated preset calibration table.

In S406, the updated preset calibration table contains the text messages in the instruction word list, so when calibrating the first text message, for the inaccurate rare words in the first text message, the first text message can be calibrated according to the preset calibration table, to obtain the third text message that can accurately express a real intention of the first input speech.

At S407, the first instruction contents of the third text message are obtained by parsing the third text message based on the instruction actions, the instruction objects and the instruction word list in the preset configuration instructions.

This step is the same as S205, only the parsed text messages are different, and reference may be made to the relevant description of S205, which may not be repeated here.

At S408, the first instruction contents are sent to a scheduling object, so that the scheduling object controls the target instruction object to execute the target instruction action based on the first instruction contents.

This step is the same as S104, and reference may be made to the relevant description of S104, which may not be repeated here.

In this embodiment, the first text message can be further calibrated to obtain the third text message that accurately expresses the first input speech, and the accurate first instruction contents can be obtained according to the third text message, so that the scheduling object can accurately control the target instruction object to execute the target instruction action, improving the speech-based instruction scheduling efficiency, reducing the scheduling operation duration, and reducing manual scheduling costs.

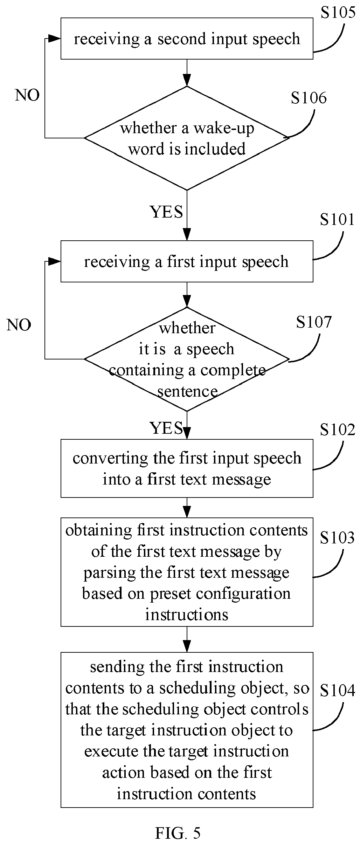

In order to more clearly describe the method for speech-based instruction scheduling according to the embodiment of the invention, a specific implementation may be described below as an example, as illustrated in FIG. 5, FIG. 5 is a flowchart of the specific implementation.

In a possible embodiment, when the execution body is always in a state capable of receiving the first input speech, but the surrounding environment is noisy, the execution body may receive the first input speech by mistake, resulting in mis-scheduling of the scheduling device. Therefore, before performing step S101 to receive the first input speech, the execution body may first perform step at S105: receiving a second input speech, and performing speech authentication on the second input speech. When the second input speech cannot be authenticated successfully, it returns to the step of receiving the second input speech.

The authentication step may be to perform step S106: determining whether the second input speech contains a wake-up word. For example, "I want to schedule" can be used as the wake-up word, when the second input speech contains "I want to schedule", after the microphone receives the second input speech and "I want to schedule" is recognized in the second input speech, it is determined that the second input speech contains the wake-up word, and the authentication is successful, which indicates that the scheduling operation needs to be performed at this time, and then, step S101 is performed to receive the first input speech.

Correspondingly, when it is determined that the second input speech does not contain a wake-up word, the authentication is failed, and there is no need to carry out the speech-based instruction scheduling operation at this time. Then, it returns to the step of receiving the second input speech, and re-determining whether to wake up the execution body to schedule.

After receiving the first input speech, step S107 is executed: determining whether the first input speech is a speech containing a complete sentence. When the first input speech contains a complete sentence, S102 is performed to convert the first input speech into the first text message. Correspondingly, when the first input speech does not contain a complete sentence, then it returns to step S101, continuing to receive the first input speech.

In detail, the scheduling instructions are usually all short instructions, that is, one instruction is performed at one time. Therefore, after receiving the first input speech, the executive body expects that the first input speech to be concise and clear, so as to facilitate subsequent scheduling operations. It is understood that when the first input speech contains multiple sentences and instructions, it may be difficult to parse the first text message to be correctly according to the preset configuration instructions, so that the scheduling object may not perform scheduling accurately. Therefore, after receiving the first input speech, it can be determined whether the first input speech is a speech containing a complete sentence.

When the first input speech is a speech containing a complete sentence, it means that the first input speech should be a concise and clear speech, and the first input speech can be converted into the first text message by performing step S102.

When the first input speech is not the speech containing a complete sentence, it can be determined that this first input speech may contain multiple instructions, or contains multiple pieces of information irrelevant to the scheduling. When this input speech is adopted as the first input speech for subsequent scheduling, the scheduling may not be successful. Therefore, when it is determined that the first input speech is not the speech containing a complete sentence, step S101 can be re-executed to receive the first input speech.

After obtaining the first text message, steps S103 and S104 can be performed successively, and the first text message is parsed according to the preset configuration instructions, to obtain the first instruction contents corresponding to the first text message. The first instruction contents are sent to the scheduling object, so that the scheduling object controls the target instruction object to execute the target instruction action according to the first instruction contents.

In this embodiment, considering the actual environment where the method is implemented, speech-based scheduling can be performed when the scheduling object is really needed for scheduling operations, so that mis-scheduling is avoided, and the scheduling efficiency and applicability of the speech-based instruction scheduling are further improved. In addition, the first input speech that may cause scheduling failure can be filtered out to avoid meaningless scheduling operations, thus avoiding resource waste and improving the scheduling efficiency.

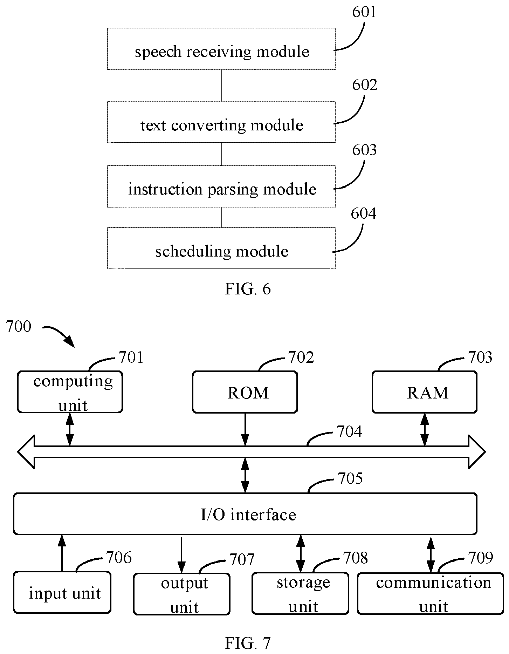

According to the embodiment of the invention, the invention also provides an apparatus for speech-based instruction scheduling, as illustrated in FIG. 6, the apparatus includes: a speech receiving module 601, a text converting module 602, an instruction parsing module 603 and a scheduling module 604.

The speech receiving module 601 is configured to receive a first input speech.

The text converting module 602 is configured to convert the first input speech into a first text message.

The instruction parsing module 603 is configured to obtain first instruction contents of the first text message by parsing the first text message based on preset configuration instructions, in which the first instruction contents are configured to represent a target instruction object and a target instruction action.

The scheduling module 604 is configured to send the first instruction contents to a scheduling object, so that the scheduling object controls the target instruction object to execute the target instruction action based on the first instruction contents.

In an embodiment, the apparatus further includes: a configuration information obtaining module and an instruction configuring module.

The configuration information obtaining module is configured to obtain instruction configuration information. The instruction configuration information includes instruction actions, instruction objects and an instruction word list, and the instruction word list includes a correspondence between text messages, the instruction objects and the instruction actions.

The instruction configuring module is configured to obtain the preset configuration instructions by configuring the instruction actions, the instruction objects and the instruction word list based on the instruction configuration information.

The instruction parsing module 603 is further configured to obtain the first instruction contents of the first text message by parsing the first text message based on the instruction actions, the instruction objects and the instruction word list in the preset configuration instructions.

In a possible embodiment, the instruction configuring module includes: an initial instruction configuring sub-module, a text message obtaining sub-module, an instruction content obtaining sub-module, a second instruction scheduling sub-module and a preset configuration instruction obtaining sub-module.

The initial instruction configuring sub-module is configured to obtain configured instructions by configuring the instruction actions, the instruction objects and the instruction word list.

The text message obtaining sub-module is configured to obtain a second text message.

The instruction content obtaining sub-module is configured to obtain second instruction contents of the second text message by parsing the second text message based on the configured instructions.

The second instruction scheduling sub-module is configured to send the second instruction contents to the scheduling object, so that the scheduling object performs a scheduling operation based on the second instruction contents.

The preset configuration instruction obtaining sub-module is configured to, in response to the scheduling operation performed by the scheduling object based on the second instruction contents being an expected scheduling operation corresponding to the second text message, determine the configured instructions as the preset configuration instructions.

In a possible embodiment, the apparatus further includes: a calibration table updating module and a third text message obtaining module.

The calibration table updating module is configured to update a preset calibration table based on the preset configuration instructions.

The third text message obtaining module is configured to obtain a third text message by calibrating the first text message based on the updated preset calibration table.

The instruction parsing module 603 is further configured to obtain the first instruction contents of the third text message by parsing the third text message based on the instruction actions, the instruction objects and the instruction word list in the preset configuration instructions.

In an embodiment, the speech receiving module 601 is further configured to receive a second input speech through the microphone; and receive the first input speech in response to determining that the second input speech is authenticated successfully.

In an embodiment, the apparatus further includes a wake-up word determination module and a speech authentication module. The wake-up word determination module is configured to determine whether the second input speech includes a wake-up word. The speech authentication module is configured to in response to determining that the second input speech includes the wake-up word, determine that the second input speech is authenticated successfully.

In an embodiment, the apparatus further includes a sentence determination module, configured to determine whether the first input speech includes a complete sentence. The text converting module 602 is further configured to convert the first input speech into the first text message in response to determining that the first input speech includes a complete sentence. The speech receiving module 601 is further configured to receive the first input speech in response to determining that the first input speech does not includes a complete sentence.

In the technical solution of the invention, collection, storage, use, processing, transmission, provision and invention of the user's personal information involved are in compliance with relevant laws and regulations, and do not violate public order and good customs.

According to the embodiments of the invention, the invention also provides an electronic device, a readable storage medium and a computer program product.

FIG. 7 is a block diagram of an example electronic device 700 used to implement the embodiments of the invention. Electronic devices are intended to represent various forms of digital computers, such as laptop computers, desktop computers, workbenches, PDAs, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 7, the electronic device 700 includes: a computing unit 701 performing various appropriate actions and processes based on computer programs stored in a read-only memory (ROM) 702 or computer programs loaded from the storage unit 708 to a random access memory (RAM) 703. In the RAM 703, various programs and data required for the operation of the device 700 are stored. The computing unit 701, the ROM 702, and the RAM 703 are connected to each other through a bus 704. An input/output (I/O) interface 705 is also connected to the bus 704.

Components in the device 700 are connected to the I/O interface 705, including: an inputting unit 706, such as a keyboard, a mouse; an outputting unit 707, such as various types of displays, speakers; a storage unit 708, such as a disk, an optical disk; and a communication unit 709, such as network cards, modems, and wireless communication transceivers. The communication unit 709 allows the device 700 to exchange information/data with other devices through a computer network such as the Internet and/or various telecommunication networks.

The computing unit 701 may be various general-purpose and/or dedicated processing components with processing and computing capabilities. Some examples of computing unit 701 include, but not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 701 executes the various methods and processes described above, such as a method for speech-based instruction scheduling. For example, in some embodiments, the method for speech-based instruction scheduling may be implemented as a computer software program, which is tangibly contained in a machine-readable medium, such as the storage unit 708. In some embodiments, part or all of the computer program may be loaded and/or installed on the device 700 via the ROM 702 and/or the communication unit 709. When the computer program is loaded on the RAM 703 and executed by the computing unit 701, one or more steps of the method for speech-based instruction scheduling described above may be executed. Alternatively, in other embodiments, the computing unit 701 may be configured to perform the method for speech-based instruction scheduling in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but not limited to, an electronic, magnetic, optical, electromagnetic, infrared, or semiconductor system, apparatus, or device, or any suitable combination of the foregoing. More specific examples of machine-readable storage medium include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server can be a cloud server, a server of a distributed system, or a server combined with a block-chain.

It should be understood that the various forms of processes shown above can be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention.

## Claims

1. A method for speech-based instruction scheduling, performed by an electronic device, comprising:
receiving (S101, S203, S403) a first input speech from a user by a microphone included in the electronic device;
converting (S102, S204, S404) the first input speech into a first text message;
obtaining (S103) first instruction contents of the first text message by parsing the first text message based on preset configuration instructions, wherein the first instruction contents comprise a target instruction object and a target instruction action; and
sending (S104, S206, S408) the first instruction contents to a scheduling object, so that the scheduling object controls the target instruction object to execute the target instruction action based on the first instruction contents.

2. The method of claim 1, further comprising:
obtaining (S201, S301, S401) instruction configuration information, wherein the instruction configuration information comprises instruction actions, instruction objects and an instruction word list, and the instruction word list comprises a correspondence between text messages, the instruction objects and the instruction actions; and
obtaining (S202, S402) the preset configuration instructions by configuring the instruction actions, the instruction objects and the instruction word list based on the instruction configuration information;
wherein obtaining the first instruction contents of the first text message by parsing the first text message comprises:
obtaining (S205) the first instruction contents of the first text message by parsing the first text message based on the instruction actions, the instruction objects and the instruction word list in the preset configuration instructions.

3. The method of claim 2, wherein obtaining the preset configuration instructions comprises:
obtaining (S302) configured instructions by configuring the instruction actions, the instruction objects and the instruction word list;
obtaining (S303) a second text message served as a test text message;
obtaining (S304) second instruction contents of the second text message by parsing the second text message based on the configured instructions;
sending (S305) the second instruction contents to the scheduling object, so that the scheduling object performs a scheduling operation based on the second instruction contents; and
in response to the scheduling operation being an expected scheduling operation corresponding to the second text message, determining (S306) the configured instructions as the preset configuration instructions.

4. The method of claim 2, further comprising:
updating (S405) a preset calibration table based on the preset configuration instructions; and
obtaining (S406) a third text message by calibrating the first text message based on the updated preset calibration table;
wherein obtaining the first instruction contents of the first text message comprises:
obtaining (S407) the first instruction contents of the third text message by parsing the third text message based on the instruction actions, the instruction objects and the instruction word list in the preset configuration instructions.

5. The method of any one of claims 1 to 4, further comprising:
receiving (S105) a second input speech by the microphone; and
in response to determining that the second input speech is authenticated successfully, receiving (S101) the first input speech.

6. The method of claim 5, wherein determining that the second input speech is authenticated successfully comprises:
in response to determining that the second input speech includes a wake-up word (S106), determining that the second input speech is authenticated successfully.

7. The method of any one of claims 1 to 6, further comprising:
in response to determining that the first input speech includes a complete sentence (S107), converting (S102) the first input speech into the first text message; and
in response to determining that the first input speech does not includes a complete sentence, continuing to receive the first input speech.

8. An apparatus for speech-based instruction scheduling, integrated into an electronic device, the apparatus comprising:
a speech receiving module (601), configured to receive a first input speech from a user by a microphone included in the electronic device;
a text converting module (602), configured to convert the first input speech into a first text message;
an instruction parsing module (603), configured to obtain first instruction contents of the first text message by parsing the first text message based on preset configuration instructions, wherein the first instruction contents comprise a target instruction object and a target instruction action; and
a scheduling module (604), configured to send the first instruction contents to a scheduling object, so that the scheduling object controls the target instruction object to execute the target instruction action based on the first instruction contents.

9. The apparatus of claim 8, further comprising:
a configuration information obtaining module, configured to obtain instruction configuration information, wherein the instruction configuration information comprises instruction actions, instruction objects and an instruction word list, and the instruction word list comprises a correspondence between text messages, the instruction objects and the instruction actions;
an instruction configuring module, configured to obtain the preset configuration instructions by configuring the instruction actions, the instruction objects and the instruction word list based on the instruction configuration information; and
wherein the instruction parsing module is further configured to obtain the first instruction contents of the first text message by parsing the first text message based on the instruction actions, the instruction objects and the instruction word list in the preset configuration instructions.

10. The apparatus of claim 9, wherein the instruction configuring module comprises:
an initial instruction configuring sub-module, configured to obtain configured instructions by configuring the instruction actions, the instruction objects and the instruction word list;
a text message obtaining sub-module, configured to obtain a second text message served as a test text message;
an instruction content obtaining sub-module, configured to obtain second instruction contents of the second text message by parsing the second text message based on the configured instructions;
a second instruction scheduling sub-module, configured to send the second instruction contents to the scheduling object, so that the scheduling object performs a scheduling operation based on the second instruction contents; and
a preset configuration instruction obtaining sub-module, configured to, in response to the scheduling operation being an expected scheduling operation corresponding to the second text message, determine the configured instructions as the preset configuration instructions.

11. The apparatus of claim 10, further comprising:
a calibration table updating module, configured to update a preset calibration table based on the preset configuration instructions;
a third text message obtaining module, configured to obtain a third text message by calibrating the first text message based on the updated preset calibration table; and
wherein the instruction parsing module is further configured to obtain the first instruction contents of the third text message by parsing the third text message based on the instruction actions, the instruction objects and the instruction word list in the preset configuration instructions.

12. The apparatus of any one of claims 8 to 11, wherein the speech receiving module is further configured to receive a second input speech through the microphone; and in response to determining that the second input speech is authenticated successfully, receive the first input speech.

13. An electronic device, comprising:
a microphone, configured to receive a first input speech from a user;
at least one processor; and
a memory communicatively coupled to the at least one processor; wherein,
the memory stores instructions executable by the at least one processor, when the instructions are executed by the at least one processor, the at least one processor is enabled to implement the method of any one of claims 1-7.

14. A non-transitory computer-readable storage medium having computer instructions stored thereon, wherein the computer instructions are configured to cause a computer to implement the method of any one of claims 1-7.

15. A computer program product comprising computer programs, wherein when the computer programs are executed by a processor, the method of any one of claims 1-7 is implemented.
